# EUROPÄISCHE PATENTSCHRIFT

(11) **EP 1 113 972 B1**
(45) Veröffentlichungstag und Bekanntmachung des Hinweises auf die Patenterteilung: **04.06.2003**
(21) Anmeldenummer: 99947300.2
(22) Anmeldetag: 10.09.1999
(51) Int. Cl.: B65G 19/14, B65G 53/44

(54) **VERFAHREN UND VORRICHTUNG ZUM EINTRAGEN KÖRNIGER FESTSTOFFE IN DRUCKSYSTEME ODER -REAKTOREN**
METHOD AND DEVICE FOR FEEDING GRANULAR SOLID SUBSTANCES INTO PRESSURE SYSTEMS OR PRESSURE REACTORS
PROCEDE ET DISPOSITIF POUR CHARGER DES SYSTEMES OU DES REACTEURS A FLUIDE SOUS PRESSION EN SOLIDES GRANULEUX

(30) Priorität: 10.09.1998 DE 19843255
(43) Veröffentlichungstag der Anmeldung: 11.07.2001
(73) Patentinhaber: Vattenfall Europe Generation AG & Co. KG, 10115 Berlin (DE)
(72) Erfinder: KRÖDEL, Bernd, D-16356 Eiche (DE)
(74) Vertreter: Zinken-Sommer, Rainer
(86) Internationale Anmeldenummer: EP9906667
(87) Internationale Veröffentlichungsnummer: WO00015523

(56) Entgegenhaltungen:
- EP-A- 0 054 871
- EP-A- 0 447 151
- DE-A- 1 556 116
- FR-A- 2 634 470
- US-A- 2 609 081

## Beschreibung

Die Erfindung betrifft ein Verfahren und eine Vorrichtung zum Eintragen von körnigem Gut für druckaufgeladene Aufbereitungs- und Verarbeitungsprozesse mit Änderung der Gasatmosphäre bei Eintritt in das Drucksystem. Insbesondere ist die Erfindung in kohlegefeuerten Kraftwerken zur Zuführung von Kohle zu dampfgefüllten Drucktrocknungsreaktoren geeignet.

Die Einspeisung von Feststoffen in druckbetriebene Aufbereitungs- oder Verarbeitungsreaktoren erfolgt bekanntlich in körniger bis feinkörniger Gutform. Die Eintragungssysteme sind einerseits angepaßt an Feststoff- und Schüttungseigenschaften und andererseits an zu überwindende Druck- und Temperaturdifferenzen sowie an die Größe des Förderstromes. Auf das technologische Grundprinzip bezogen reduziert sich die große Anzahl der bisher bekannten Eintragssysteme auf die Gruppen
- Verdrängungssysteme
- Kammerschleusen
- Zellradschleusen
- Stopfschnecken
- Extruder
- Rohrkettenförderer

Die aus einem im allgemeinen zylindrischen Gutaufnahmebehälter und einem darin beweglichen Kolben bestehenden Verdrängungssysteme wie DE 84 30 90, DE 12 95 490, DD 245 414, DE 38 13 899 arbeiten diskontinuierlich und nur im Zusammenspiel mit Kugelhähnen, Kegelventilen oder Plattenschiebern als zusätzliche Verschlußelemente für Arbeitsgase oder Arbeitsflüssigkeiten. Nur über eine mehrstufige oder mehrlinige Anordnung läßt sich aus Sicht des zu beschickenden Drucksystems ein quasikontinuierlicher Eintrag erreichen.

Ein mit Dickstoff-Kolbenpumpen realisierter Suspensionseintrag stellt eine praktische Lösung überall dort dar, wo die Flüssigphase der Suspension für den Gesamtprozeß keinen störenden Einfluß hat.

Für den Eintrag bereits hochfeuchter Brennstoffe wie Braunkohle wäre diese Lösung mit Nachteil verbunden, da der untere Heizwert weiter reduziert wird und der Prozeßwirkungsgrad der Energieumwandlung zusätzlich belasten würde.
Die aus der Hochofentechnik und Kohlevergasung bekannten Kammerschleusen zeichnen sich ebenfalls durch eine diskontinuierliche Arbeitsweise aus und erfordern eine technologie- und kostenintensive mehrstraßige Ausführung , um für das jeweilige Drucksystem einen quasikontinuierlichen Eintrag zu erreichen. Typische Lösungen hierzu sind in DE 169724, DE 482402, DE 862429, DE 1903539, DE 260754, DE 3619141, DE 3205321, DE 4114680, DE 3311655, DE 3410721 beschrieben.
Die Zellradschleusen als "rotierende" Kammerschleusen gestatten einen kontinuierlichen Eintrag, sind allerdings bisher nur für Anwendungen bei geringen Druckdifferenzen (bis zu 3 bar) und zusammen mit gutem Fließverhalten geeignet, um den Auslauf der Zellen zu gewährleisten (DE 1049303).
Der mechanische, trockene Eintrag mittels Stopfschnecken, bekannt als Fulleroder Möller-Pumpe in den Aufgabestationen druckpneumatischer Förderungen, vorzugsweise mit Druckluft, aufgespanntem Stickstoff oder inerten, verdichteten Rauchgasen betrieben, überwindet gerade noch Gegendrücke bis maximal 5 bar. Das Förder- bzw. Aufgabegut muß dabei mindestens oberflächentrocken sein. Nicht geeignet ist dieses System bei Verwendung z. B. hochfeuchter Brennstoffe wie Braunkohle. Wie aus DE 1442742, DE 2249453 und DE 2904321 bekannt, arbeiten die Stopfschnecken gegen Pendelklappen oder gegen dichtende Schäl- oder nachgeschaltete Fräsköpfe. Eine beidseitig gelagerte Stopfschnecke ist aus DD 215 989 bekannt.
Extruder als Stopfschnecken mit sich stetig verkleinernden Förderquerschnitt sind zwar geeignet zur Überwindung sehr großer Druckdifferenzen (bis 1200 bar und Durchsätzen bis 100 t/h), deren Einsatz beschränkt sich allerdings auf trockenes und staubförmiges Gut, so daß beim Verdichten keine Kompaktierung des feinkörnigen Feststoffes auftritt.

Es sind Rohrkettenförderer bekannt, die zur Überwindung von Differenzdrücken mit einer Schleusgasverdrängung mittels Druckwassereinspeisung in einige Zellen des Leerrohrabschnittes ausgerüstet sind. Als Eintragssystem z. B. für körnige Braunkohle ist diese Lösung ebenfalls ungeeignet, weil die Anbackungs- und Verklebungsneigung dieses Feststoffes nicht vermindert, sondern erhöht wird.

Wie diese Analyse der bisher bekannten technischen Lösungen zeigt, gibt es für den uneingeschränkten kontinuierlichen Eintrag von oberflächenfeuchten Feststoffen wie beispielsweise körniger Braunkohle in Drucksysteme von 5 bis 20 bar Absolutdruck bisher keine geeigneten Lösungen. Noch schwieriger ist der Eintrag dieses speziellen Brennstoffes in Drucksystemreaktoren, in denen das Drucksystem durch nur gering überhitzten Dampf aufgebaut ist und die Förderströme in einer Größenordnung von 30 bis 200 t/h liegen.

Der Erfindung liegt die Aufgabe zugrunde, körniges und oberflächenfeuchtes Material wie beispielsweise Braunkohle in der Form einer Rohfeinkohle direkt kontinuierlich in Drucksysteme eintragen zu können, wobei die Gasatmosphäre im Drucksystem generell eine andere als außerhalb des Drucksystems ist, die zu überwindende Druckdifferenz ≥ 5 bar beträgt und der Förderstrom eine Größe von mindestens 25 t/h hat.

Dies wird erfindungsgemäß durch die Patentansprüche gelöst, wobei das körnige Material dem Druckreaktor mit einem Rohrkettenförderer zugeführt wird, dessen Vor- und Rücktrum zur Zuspeisung sowohl von der Antriebsseite als auch von der entgegengesetzten Seite mit Spannstation genutzt wird und beide Förderrohre etwa längenmittig einen Austragsstutzen besitzen, an denen der Druck des versorgten Druckreaktors unmittelbar ansteht. An den beiden Eintragsstutzen von Vor- und Rücktrum herrscht Luftatmosphäre. In Förderrichtung nach dem Eintragsstutzen und in beiden leerlaufenden Abschnitten jeweils vor Kettenumlenkung befinden sich Rohrstutzen zur Abführung geringfügig pulsierender Leckagegasmengen, die sich in beiden Förderrohrabschnitten etwa bis auf Umgebungsdruck entspannt haben. Während in den beiden Förderrohrabschnitten das körnige Material der Gasleckage auf zweierlei Art Widerstand entgegensetzt und somit selbst zur Druckabdichtung zumindest anteilig beiträgt, besitzen alle Förderscheiben flexible Abdichtringe (vorzugsweise Ledermanschetten), die durch den höheren Gasdruck auf einer Scheibenseite leicht gegen das Förderrohr angedrückt werden, so daß sich speziell in den beiden Leerrohrabschnitten (Rohrabschnitte ohne Materialfüllung) der Gasleckagestrom minimiert.
Die Leckagerohrstutzen der Leerrohrabschnitte sind auf kürzestem Weg mit den Leckagerohrstutzen der Gefülltrohrabschnitte mittels Rohrleitung verbunden und so an einen Gewebefilter angeschlossen, in dem mitgerissenes Feinstkorn abgeschieden und zum Hauptförderstrom zurückgeführt wird.

Die Druckimpulse des Leckagestromes aus den Leerrohrabschnitten dienen zur Abreinigung der Filterelemente.

Die erfindungsgemäße Lösung wird anhand eines Ausfürungsbeispieles näher erläutert. Dabei zeigen:
- Fig. 1:: den druckdichten Rohrkettenförderer im Längsschnitt
- Fig. 2:: die Anordnung der Gleit- und Abdichtmanschetten an den Förderhauptscheiben

Die gegen Überdruck abschließende und gleichzeitig die Trennung auch unterschiedlicher Gasatmosphären vornehmende Rohrkettenförder- und -eintragsanlage 1 besitzt gegenüber herkömmlichen Rohrkettenförderern in mittiger Anordnung ein druckfest ausgelegtes Verbindungsstück 4 mit den Förderrohraustragsstellen 11 und 12, das direkt am hier nicht gezeigten Oberteil des Druckreaktors angeflanscht ist. Über die Förderrohre 5 und 7 einschließlich der Leerrohre 6 und 8 ist das zentrale Verbindungsstück 4 mit der Spannstation 3 und der Antriebsstation 2 verbunden. Die Förderrohre 5 und 7 sind mit Feststoffeintragsstutzen 9 und 10 sowie mit in kurzem Abstand nachfolgenden Gasleckage-Ableitrohrstutzen 17; 18 versehen. An den Leerrohren 6; 8 sind ebenfalls Gasleckage-Ableitrohrstutzen 19; 20 angebracht, hier allerdings in geringem Abstand vor den Kettenumlenkstationen. Die Umlenkstationen 2; 3, die Austragsstation 4 und die Förderrohre 5; 6; 7; 8 nehmen die mit Förderscheiben 21 versehene Förderkette 22 auf. Die Rohrleitungen 13 und 14 verbinden die Gasleckageableitstellen 19; 20 mit den unmittelbar an die Gasleckageableitstellen 17; 18 angeschlossenen Leckagegasstaubfilter 15; 16.

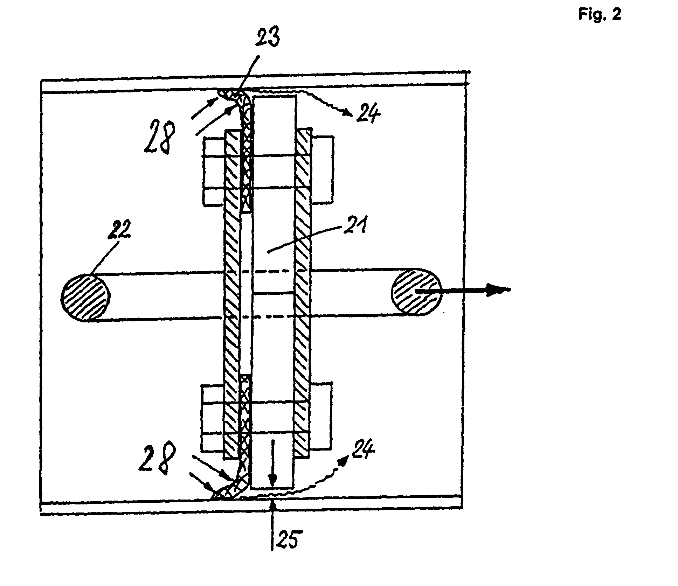

Fig. 2 zeigt eine einzelne Förderscheibe 21 mit an die Rohrinnenwand der Leerrohre 6; 8 infolge des auf dieser Scheibenseite bestehenden höheren Drucks des Gases 28 hinreichend stark gepreßten flexiblen Manschettenringen 23, wobei kleine Gasleckagen 24 durch den Ringspalt 25 sein sollen, um zwischen Austragsstation 4 und den Leckageableitstutzen 19; 20 einen stufenweisen Druckabbau in Kettenbewegungsrichtung sicherzustellen. In den eigentlichen Förderabschnitten 5; 7 wird die abdichtende Wirkung der flexiblen Dichtmanschetten ersetzt durch die Feststoff-Füllung selbst, wobei auch in diesen Förderabschnitten ein Leckagegasstrom zur Absperrung der unterschiedlichen Gasatmosphären erforderlich ist. Steht im Austragselement 4 eine Dampfatmoshpäre oder eine Atmosphäre anderer leicht kondensierbarer Gase an, so sind die Abschnitte 5; 6; 7; 8 mit koaxial angeordneten Rohren ausgeführt, wobei zwischen dem inneren Förderrohr und dem Außenrohr 26 ein Heizmedium (hier nicht näher bezeichnet) geführt wird.
Diese indirekte Beheizung wendet Leckagegas-Kondensation ab und trägt andererseits zur Vorwärmung des einzutragenden Gutes bei. Die thermische Isolationsschicht 27 reduziert Wärmeverluste, die vom Heizmedium ausgeglichen werden, nicht aber von den Leckagegasströmen.

Diese erfindungsgemäße Vorrichtung ermöglicht erstmals einen "echten" kontinuierlichen Eintrag von Schüttgut mit hohem Feuchteanteil, z. B. von Rohbraun-Feinkohle, in druckbetriebene Verarbeitungsprozesse, auch druckbetriebene Energieaustausch- und -umwandlungsprozesse, wobei der Gegendruck 5 bar und mehr beträgt, getragen von zumeist anderen Gasen bzw. Gasgemischen als Luft.

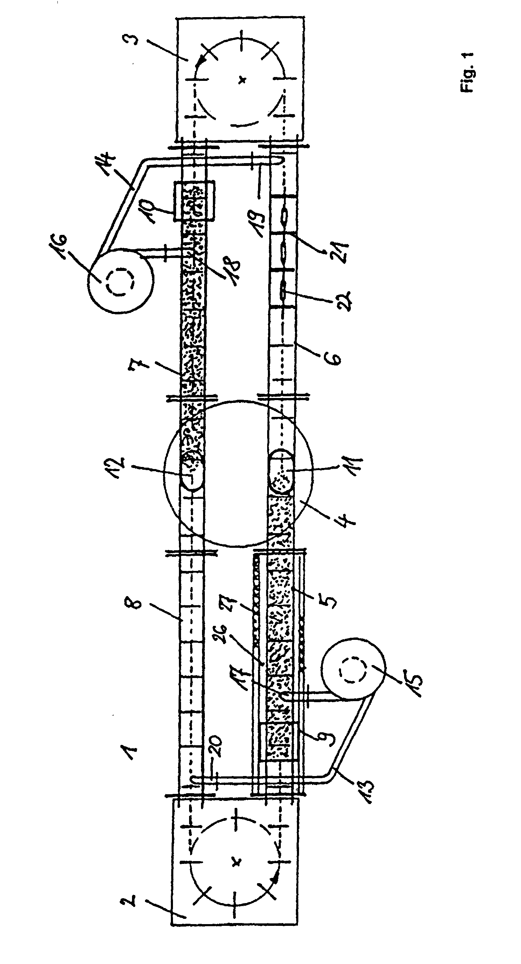

Weitere Vorteile ergeben sich dadurch, daß sich Überdruck nur in den Förderrohren befindet, der Druckabbau (Fig.1) in Richtung Antriebs- und Spannstation erfolgt, dieselben ohne Überdruck sind, daß der mittige Austrag zu einer nahezu symmetrischen Druckbelastung der Förder-/ Eintragsanlage führt, die Medienzuführung und Druckabdichtung
in ein und derselben Anlage erfolgen, die doppelte Eintragleistung bei gleicher Kettengeschwindigkeit (0,2 bis 0,3 m/sec) erreicht wird gegenüber bisher betriebenen Rohrkettenförderern, die Leckagegasreinigung, die Nutzbarkeit auch der Leckagegasmenge absichert, das geschlossene und staubdichte System einen hohen Brand- und Explosionsschutz aufweist.

### Aufstellung der verwendeten Bezugszeichen

- 1: Rohrketteneintragsanlage
- 2: Antriebs- und Umlenkstation
- 3: Spann- und Umlenkstation
- 4: druckfeste Austragsstation
- 5: erstes Eintragsrohr
- 6: erstes Leerrohr
- 7: zweites Eintragsrohr
- 8: zweites Leerrohr
- 9: erster Guteintrag
- 10: zweiter Guteintrag
- 11: erster Gutaustrag
- 12: zweiter Gutaustrag
- 13: erstes Leckagegasverbindungsrohr
- 14: zweites Leckagegasverbindungsrohr
- 15: erster Leckagegasentstauber
- 16: zweiter Leckagegasentstauber
- 17: Leckagegasrohrstutzen
- 18: Leckagegasrohrstutzen
- 19: Leckagegasrohrstutzen
- 20: Leckagegasrohrstutzen
- 21: Förderhauptscheibe
- 22: Förderkettenglied
- 23: Abdichtmanschette
- 24: Leckagegas
- 25: Ringspalt
- 26: Koaxialrohrabschnitt
- 27: Wärmeisolation
- 28: Druckgas
- 29: staubbeladener Brüden
- 30: Druckreaktor

## Patentansprüche

1. Verfahren zum Eintragen körniger Feststoffe in Drucksysteme oder - reaktoren, wobei stets eine andere Gasatmosphäre als Luft vorhanden ist, **gekennzeichnet dadurch,**
**daß** das kleinkörnige Material kontinuierlich und massenstromgeregelt einem austragsseitig direkt an den Druckreaktor (30) angeschlossenen Rohrkettenförderer (1) zugeführt und die Druckabdichtung jeweils zwischen den Rohrein- (9; 10) und -austrägen (11; 12) einerseits durch das Fördergut selbst und andererseits durch einseitig an den Kettenförderscheiben (21) angebrachte flexible Abdichtmanschetten (23) erfolgt, die durch jeweils höheren Gasdruck auf einer Scheibenseite gegen die Förderrohrinnenwandung jeweils bei Translation im Leerrohr (6; 8) angedrückt werden, dabei aber noch einen Gasleckagestrom zulassen, durch dessen schrittweise Teilentspannungen an jedem verbleibenden Durchtrittsspalt (25) innerhalb des aktiven Gesamiförderweges die gesamte zu überwindende Druckdifferenz ausgeglichen wird.

2. Verfahren nach Anspruch 1, **gekennzeichnet dadurch, daß** vom Rohrkettenförderer (1) sowohl der Vor- als auch der Rücktrum zum Zuspeisen eingesetzt wird.

3. Verfahren nach Anspruch 1, **gekennzeichnet dadurch, daß** mit Hilfe des Leckagegases sowohl direkt in den beiden mit körnigem Gut gefüllten Förderabschnitten (5; 7) als auch indirekt durch Erwärmung der Förderkette (22) in beiden Leerrohrabschnitten (6; 8) eine Vorwärmung des einzutragenden Materials durchgeführt wird.

4. Vorrichtung zum Eintragen von körnigen Feststoffen in Drucksysteme oder-reaktoren,
**gekennzeichnet dadurch,**
**daß** ein an sich bekannter Rohrkettenförderer (1) druckdicht ausgeführt ist, wobei die Förderhauptscheiben (21) zum Abdichten der Ringspalte (25) und/oder der Teilringspalte zwischen Scheibe (21) und Förderrohr (5; 7) mit flexiblen Gleit- und Abdichtmanschetten (23) versehen, der Austrag (11; 12) längsmittig und - in Förderrichtung gesehen - nach dem Guteintragsbereich (9; 10) und in den leerlaufenden Rohrabschnitten (6; 8) vor der Kettenumlenkung (2; 3) Rohrstutzen (19; 20) angeordnet sind.

5. Vorrichtung nach Anspruch 4, **gekennzeichnet dadurch, daß** die Gleit- und Abdichtmanschetten (23) einseitig an den Förderhauptscheiben (21) angeordnet sind.

6. Vorrichtung nach Anspruch 4, **gekennzeichnet dadurch, daß** an den Rohrstutzen(2; 3) Gewebefilter (15; 16) angeordnet sind.

## Claims

1. A method for introducing granular solids into pressurized systems or pressurized reactors within which gaseous atmospheres other than air are present at all times,
wherein
the fine, granular, material is continuously supplied at a controlled mass flow rate to a tubular chain conveyor (1) whose exit end is directly connected to the pressurized reactor (30) and the pressure seals between the loading chambers (9, 10) and offloading chambers (11, 12) on its tubes are generated both by the material being conveyed and by flexible sealing sleeves (23) that are arranged on one side of the chain conveyor's conveyor plates (21) and are pressed up against the inner wall of the associated conveyor tube by translatory motions occurring within the empty sections (6, 8) of the conveyor tubes, but, nevertheless, still allow a stream of escaping gas whose incremental partial relaxations of the internal pressure at every remaining gap (25) from which gas can escape located within the entire active section of the conveyor equalize the pressure difference to be overcome.

2. A method according to claim 1, wherein both the supply line and return line of the tubular chain conveyor (1) are utilized for supplying the pressurized reactor.

3. A method according to claim 1, wherein the escaping gas is used to preheat the material to be introduced both directly by heating the material contained in both sections (5, 7) of the conveyor filled with granular material and indirectly by heating the conveyor chains (22) in the empty sections (6, 8) of the conveyor tubes.

4. A device for introducing granular solids into pressurized systems or pressurized reactors,
wherein
a known type of tubular chain conveyor (1) is configured such that it is hermetically sealed, where the main conveyor plates (21) for sealing the annular gaps (25) and/or arced gaps between those plates (21) and the conveyor tubes (5, 7) are provided with flexible sliding and sealing sleeves (23), the exit chambers (11, 12) are arranged at the midpoints of the tubular conveyor's longitudinal axes and following the loading area (9, 10), viewed in the direction of transport, and pipe fittings (19, 20) are arranged on the emptying sections (6, 8) of the conveyor tubes, preceding the chain idler mechanisms (2, 3).

5. A device according to claim 4, wherein the sliding and sealing sleeves (23) are arranged on one side of the main conveyor plates (21).

6. A method according to claim 4, wherein fabric filters (15, 16) are arranged on the pipe fittings (19, 20).

## Revendications

1. Procédé pour le chargement de matières solides granuleuses dans des systèmes ou réacteurs sous pression, où règne toujours une atmosphère gazeuse autre que l'air,
**caractérisé par le fait**
**que** le matériau à granulométrie fine est amené en continu avec un débit massique régulé à un convoyeur à chaîne à tubes (1) dont la sortie est raccordée directement au réacteur sous pression (30) et que l'étanchéité entre, d'un côté les entrées (9,10), et de l'autre côté les sorties (11,12) du tube se fait d'une part, par la matière à transporter elle-même, et d'autre part par des manchettes d'étanchéité flexibles (23) disposées unilatéralement sur les disques du convoyeur à chaîne (21) qui, du fait de la pression gazeuse toujours supérieure d'un côté du disque, sont appliquées contre la paroi interne du tube du convoyeur lors de la translation dans le tube non rempli (6, 8), autorisant cependant un débit de fuite gazeux, dont les détentes partielles successives au niveau de chaque interstice de passage restant (25) sur l'intégralité du parcours de transport actif permettent de vaincre la différence de pression totale existante.

2. Procédé selon la revendication 1, **caractérisé par le fait qu'**à partir du convoyeur à chaîne à tubes (1) aussi bien le brin avant que le brin arrière est utilisé pour l'alimentation.

3. Procédé selon la revendication 1, **caractérisé par le fait qu'**un préchauffage du matériau à transporter est obtenu au moyen du gaz de fuite aussi bien directement dans les deux sections remplies de matière granuleuse (5, 7) qu'indirectement par l'échauffement de la chaîne du convoyeur (22) dans les deux sections du tube non rempli (6, 8).

4. Dispositif pour le chargement de matières solides granuleuses dans des systèmes ou des réacteurs sous pression,
**caractérisé par le fait**
**qu'**un convoyeur à chaînes à tubes (1) connu est exécuté de manière étanche, où les disques principaux du convoyeur (21) sont munis de manchettes d'étanchéité et de glissement flexibles (23) pour l'étanchéité de l'interstice annulaire (25) et/ou des interstices annulaires partiels entre le disque (21) et le tube du convoyeur (5, 7), et que la sortie (11, 12) est disposée au milieu de la longueur et - vue dans le sens du transport - après la zone de chargement de la matière (9, 10) et que des tubulures (19, 20) sont disposées dans les sections de tube non rempli (6, 8) avant les renvois de la chaîne (2, 3).

5. Dispositif selon la revendication 4, **caractérisé par le fait que** les manchettes d'étanchéité et de glissement (23) sont disposées unilatéralement au niveau des disques principaux du convoyeur (21).

6. Dispositif selon la revendication 4, **caractérisé par le fait que** des filtres en tissu (15, 16) sont disposés sur les tubulures (19, 20).
